# FASCICULE DE BREVET EUROPEEN

(11) **EP 3 027 511 B1**
(45) Date de publication et mention de la délivrance du brevet: **05.04.2023**
(21) Numéro de dépôt: 14744870.8
(22) Date de dépôt: 31.07.2014
(51) Int. Cl.: B64G 1/64, F42B 15/38

(54) **PROCÉDÉ ET DISPOSITIF DE LIAISON ET DE SÉPARATION DE DEUX ÉLÉMENTS, AVEC DES PLAQUES DE LIAISON**
VERFAHREN UND VORRICHTUNG ZUM VERBINDEN UND TRENNEN VON ZWEI ELEMENTEN MITTELS VERBINDUNGSPLATTEN
METHOD AND DEVICE FOR CONNECTING AND SEPARATING TWO ELEMENTS BY MEANS OF CONNECTING PLATES

(30) Priorité: 01.08.2013 FR 1357639
(43) Date de publication de la demande: 08.06.2016
(73) Titulaire: ArianeGroup SAS, 78130 Les Mureaux (FR)
(72) Inventeur: MEDINA, Felipe, 78170 La Celle Saint Cloud (FR); PREAUD, Luc, 78440 Gargenville (FR)
(74) Mandataire: Brevalex
(86) Numéro de dépôt international: PCT/EP2014/066506
(87) Numéro de publication internationale: WO 2015/014943

(56) Documents cités:
- WO-A2-2007/094801
- WO-A2-2011/003965
- JP-A- 2002 211 500
- US-A- 3 427 047
- US-A- 4 648 227
- US-A- 5 402 728
- F. Z Smith: "Pyrotechnic shaped charge separation systems for aerospace vehicles", NASA Technical Memorandum NASA-TM X-1607, 1 juillet 1968 (1968-07-01), XP055118058, Washington, D.C., USA Extrait de l'Internet: URL:http://ntrs.nasa.gov/search.jsp?R=1968 0019397 [extrait le 2014-05-14]

## Description

### Domaine de l'invention

L'invention concerne une séparation linéaire, la plus douce possible, d'un premier élément par rapport à un second élément, qui sont au préalablement liés de façon rigide. L'invention s'applique, de préférence, aux lanceurs spatiaux, pour la séparation des étages entre eux, d'un lanceur et de sa coiffe, ou d'un étage et de la charge utile, de missiles, de sondes spatiales, voire d'avions, dans le cas d'un largage de charge utile. Cette séparation a pour but de réduire la masse de l'ensemble embarqué, ou de larguer une charge utile. Ces applications se caractérisent par le fait qu'on a besoin de séparer des objets qui peuvent être fragiles, par exemple un satellite, et dont la liaison a eu à subir des charges mécaniques élevées, comme celles subies lors de la propulsion par un lanceur.

### Art antérieur et problème posé

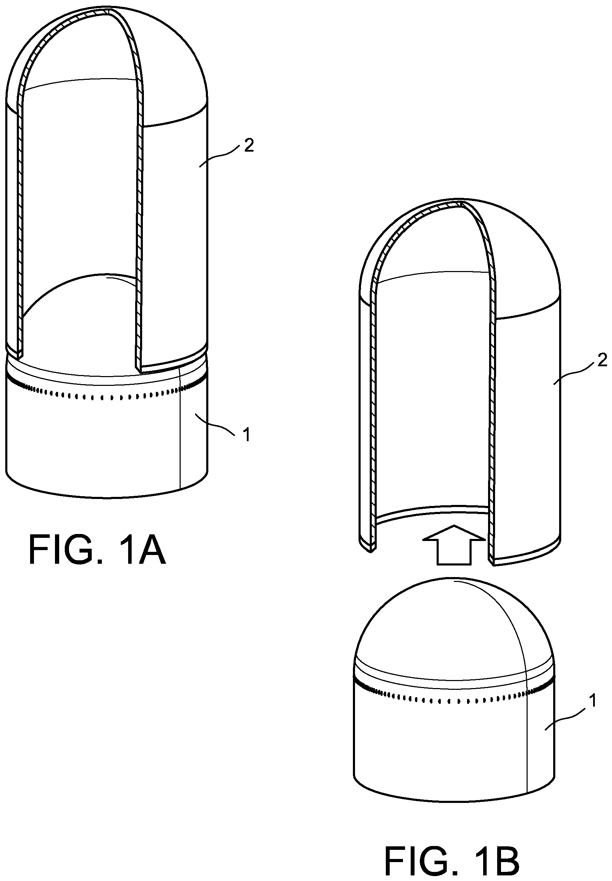

Les Figures 1A et 1B illustrent ce principe de séparation entre deux éléments 1 et 2 d'un lanceur. Le premier élément 1 est, de préférence, un élément de rang n, de préférence, un premier étage moteur. Le deuxième élément est un élément de rang n + 1, soit un deuxième élément moteur, soit une charge utile, par exemple un satellite. La séparation linéaire, dans l'axe du lanceur, doit donc être effectuée sans détérioration de la base du deuxième élément et, dans le cas où on désire récupérer le premier élément 1, sans détérioration de la surface de celui-ci, où se trouvait la liaison entre ces deux éléments 1 et 2.

Dans l'état actuel de la technique, le système de liaison-séparation est principalement de quatre types, qui sont les suivants :
1°) les liaisons par boulonnerie, rivetage et découpe pyrotechnique par pression et élévation de température localement de la structure. Ces systèmes, de par leur fonctionnement, engendrent des débris de matière éjectés. De plus, la découpe provoque un choc important dans la structure, ce qui peut être dommageable pour les charges utiles du lanceur ;
   Les documents de brevet FR 2 947 808 et WO 2011/003965 montrent des exemples de mise en oeuvre d'une telle solution.
2°) les liaisons par boulonnerie, rivetage et découpe pyrotechnique par rupture de la structure, par l'intermédiaire de la déformation d'un élément pyrotechnique. Cette solution est la plus employée et n'engendre pas de débris, mais provoque un choc très important ;
3°) les liaisons par boulonnerie pyrotechnique et rupture ou séparation de l'écrou. Ce type de solution engendre beaucoup moins de chocs que les deux précédentes, mais nécessite plusieurs boulons pour passer les efforts d'un élément à l'autre, engendrant donc des risques plus importants de défaillances du fait du nombre de dispositifs impliqués ;
4°) les liaisons par sangle et ruptures de celle-ci par boulons pyrotechniques. Ce type de solution ne permet pas de passer de gros efforts entre les deux éléments et n'autorise pas de diamètres trop importants pour les lanceurs. Dans ce cas également, le relâchement des contraintes provoque un choc important dans les structures.

De manière générale, dans l'état actuel de ces techniques, les systèmes dérivant de ces solutions de liaison-séparation ont la particularité de laisser, la plupart du temps, des aspérités sur la forme extérieure du lanceur, après la séparation.

Le but de l'invention est de remédier aux inconvénients susmentionnés.

### Objets de l'invention

A cet effet, un premier objet principal de l'invention comme indiqué par les revendicaitons 1 et 2 est un procédé de liaison et de séparation de deux éléments liés l'un à l'autre par une liaison locale définie et devant être séparés de la façon certaine, la séparation ayant lieu au niveau ou à l'entour de la liaison, l'échauffement étant déclenché à distance.

Selon une réalisation, le procédé comprend les étapes suivantes :
- lier les premier et deuxième éléments par l'intermédiaire de deux plaques de liaison, fixées respectivement sur le premier élément et sur le deuxième élément, avec des moyens de liaison placés entre les deux surfaces de liaison respectives de ces deux plaques de liaison de la thermite, amorçable par une liaison électrique de commande, étant placée près des moyens de liaison ; et
- déclencher ladite thermite par un ordre électrique pour provoquer, par son seul échauffement, l'échauffement rapide, et non pas l'explosion, et la destruction des moyens de liaison.

Un deuxième objet principal de l'invention comme indiqué par les revendications 3 et 5 est un dispositif de liaison et de séparation de deux éléments, un premier élément et un deuxième élément, liés l'un à l'autre par une liaison locale définie, et devant être séparés de façon certaine, la séparation ayant lieu au niveau de la liaison, cet échauffement étant déclenché à distance.

Selon une réalisation, le dispositif comprend :
- une couche de liaison du premier élément et du deuxième élément, cette couche de liaison étant placée entre deux plaques de liaison respectivement des premier et deuxième éléments ;
- de la thermite placée près des moyens de liaison ; et
- des moyens de déclenchement pyrotechnique à distance de la thermite.

Une variante du dispositif prévoit que la thermite soit placée sur une première surface, dite surface de matériau, d'une première des deux plaques de liaison, cette surface de matériau étant opposée à une deuxième surface, dite de liaison, de cette première pièce de liaison et qui est en contact avec les moyens de liaison.

Dans ce cas, on utilise, de préférence, une plaque de protection thermique, complétée d'un capot, placés tous deux entre la première plaque de liaison portant la thermite et le premier élément.

Selon une autre variante du dispositif, la thermite est placée dans des rainures pratiquées sur la surface de liaison de la deuxième plaque de liaison.

De préférence, les plaques de liaison sont fixées sur leur élément respectif par boulonnage.

Les moyens de liaison peuvent être constitués par de la colle, ou par un brasage.

Une réalisation de l'invention est un lanceur aéronautique comportant un premier étage porteur et un deuxième étage porté par le premier étage porteur, ces deux étages étant liés linéairement et devant être séparés linéairement, le lanceur comprenant une pluralité de dispositifs tels que décrits précédemment, répartis sur toute la circonférence du lanceur, entre les deux étages, pour solidariser et séparer ces étages, le premier élément de chaque dispositif précédent étant la paroi du premier étage porteur, le deuxième élément de chaque dispositif précédent étant la paroi du deuxième étage porté.

Dans une première réalisation d'un tel lanceur, la première des deux plaques de liaison a un premier talon interne s'étendant latéralement en prenant appui sur une extrémité de la plaque de liaison, et possède deux deuxième talon externe pour entourer la plaque de protection thermique et le capot.

Dans une deuxième réalisation du lanceur, la deuxième plaque de liaison possède un talon interne s'étendant latéralement en prenant appui sur une extrémité de la première plaque de liaison.

### Liste des Figures

L'invention et ses caractéristiques techniques seront mieux comprises à la lecture de la description suivante, qui est accompagnée de quatorze Figures, représentant respectivement :
- Figures 1A et 1B, deux schémas représentant la séparation de deux éléments dans un lanceur ;
- Figure 2, une vue latérale du dispositif selon l'invention ;
- Figures 3A et 3B, deux coupes différentes du dispositif selon l'invention, dans une première réalisation ;
- Figure 4, en coupe, un détail du dispositif selon l'invention, dans cette première réalisation ;
- Figure 5A et 5B, en vue cavalière, le dispositif selon l'invention, dans cette première réalisation ;
- Figures 6A et 6B, deux coupes du dispositif selon l'invention, dans une deuxième réalisation de l'invention ;
- Figure 7, en coupe, un détail du dispositif selon l'invention, dans cette deuxième réalisation de l'invention ; et
- Figures 8A et 8B, en vue cavalière, le dispositif selon l'invention, dans cette deuxième réalisation de l'invention.

### Description détaillée de l'invention

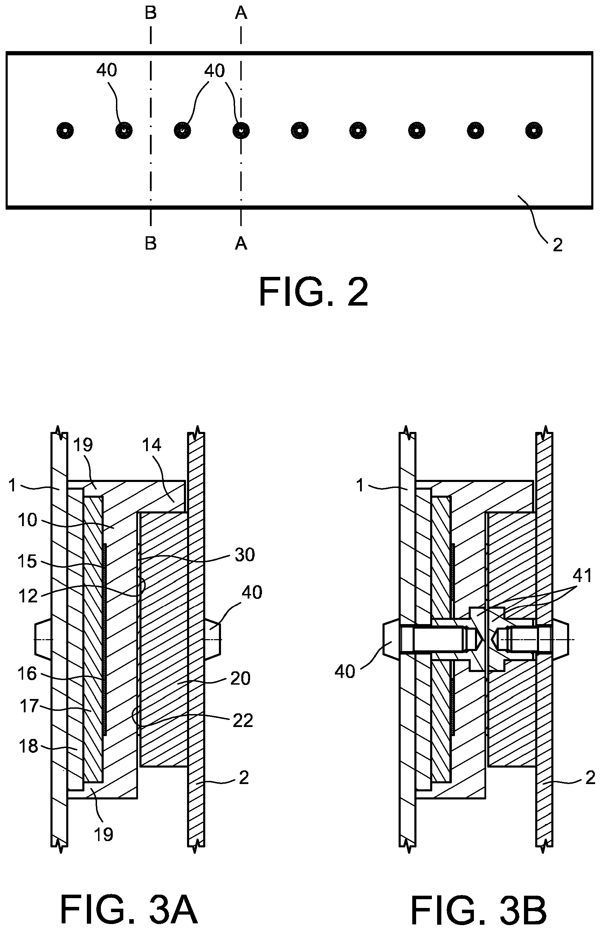

La Figure 2 permet de mieux situer, l'une par rapport à l'autre, les Figures 3A et 3B relatives à la première réalisation décrite de l'invention, mais elle sera commentée plus loin.

Sur les deux Figures 3A et 3B, l'élément 1 et l'élément 2, qui sont à assembler et à séparer ensuite, sont représentés chacun par une plaque qui constitue chacune la structure externe de deux étages de lanceur à fixer et à séparer ensuite.

Les principaux éléments de liaison des deux éléments 1 et 2, entre eux, sont constitués par une couche de liaison 30 contenant un agent de liaison, placée entre deux plaques de liaison 10 et 20 qui sont respectivement associées aux éléments 1 et 2, et plus exactement entre les surfaces de liaison 12 et 22 des plaques de liaison 10 et 20. Des boulons 40 permettant de solidariser chacun des éléments 1 et 2 avec leur plaque de liaison respective 10 et 20. La couche de moyen de liaison peut être constituée par de la colle ou un brasage.

Les lignes A-A et B-B de la Figure 2 explicite les sections représentées par les Figures 3A et 3B. En effet, la ligne A-A coupe la structure en passant par un élément de fixation par boulonnage, à savoir une vis 40. Ainsi, le long de toute la structure à maintenir assembler, puis à séparer, se trouve une pluralité d'éléments de fixation, tels que des vis 40 vissées chacune à travers l'une des deux éléments 1 ou 2, sur laquelle la tête de la vis prend appui. Le vissage de ces vis 40 s'effectue dans des écrous 41 incorporés et enfermés dans les plaques de liaison 10 et 20, grâce à un décrochement.

On remarque que la plaque de liaison 10 possède un premier talon 14 s'étendant latéralement par rapport au sens des structures des éléments 1 et 2, prenant ainsi appui sur une extrémité de l'autre plaque de liaison 20. En effet, dans le cas d'un lanceur aéronautique, voire spatial, les forces tangentielles entre les éléments 1 et 2 peuvent être considérables. En conséquence, pour compléter la fonction de liaison de l'élément liant de la couche de liaison 30, le talon 14 de la première plaque de liaison 10 permet de reprendre une grande partie des efforts longitudinaux transmise entre les deux éléments 1 et 2.

La ligne B-B ne coupe pas ces éléments de fixation. Ainsi la Figure 3B ne représente que la tête des deux vis 40 qui dépassent par rapport à l'ensemble de la structure.

Le montage selon l'invention se complète par une couche thermique 15 constituée de thermite, placée sur une surface thermique 16 de la première pièce de liaison 10, et opposée à la surface de liaison 12 (définition de thermite : mélange d'un combustible métallique pouvant souvent être l'aluminium, mais pas uniquement, et d'un oxydant, souvent un oxydant métallique). On précise que le terme « thermite » englobe ici les nanothermites. Cette couche thermique 15 est recouverte par une plaque de protection thermique 17, placée entre deux seconds talons 19 de la première pièce de liaison 10, du côté du premier élément 1.

Cette plaque de protection thermique 17 est elle-même recouverte d'un capot 18 pour mettre en compression l'ensemble de la couche thermique 15 et de sa plaque de protection thermique 17. Un joint peut assurer, éventuellement, l'étanchéité vis-à-vis de la première pièce de liaison 10. Enfin, le capot 18 est lui-même enfermé entre les deux deuxièmes talons 19, grâce au premier élément 1.

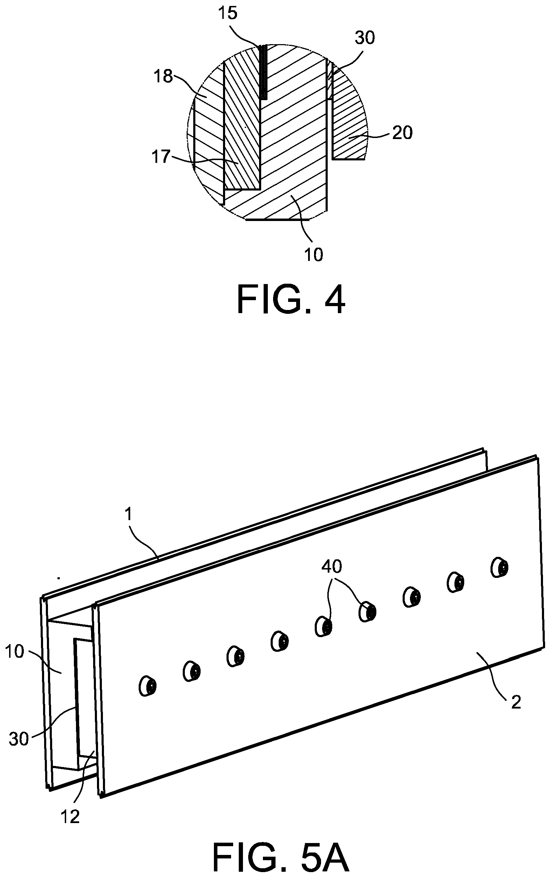

La Figure 4 montre en détail cet empilement de différentes pièces et couches.

La Figure 5A montre l'ensemble en perspective, notamment l'élément 1, la première pièce de liaison 10, la couche de liaison 30, la deuxième pièce de liaison 12, le deuxième élément 2 et la tête des vis 40.

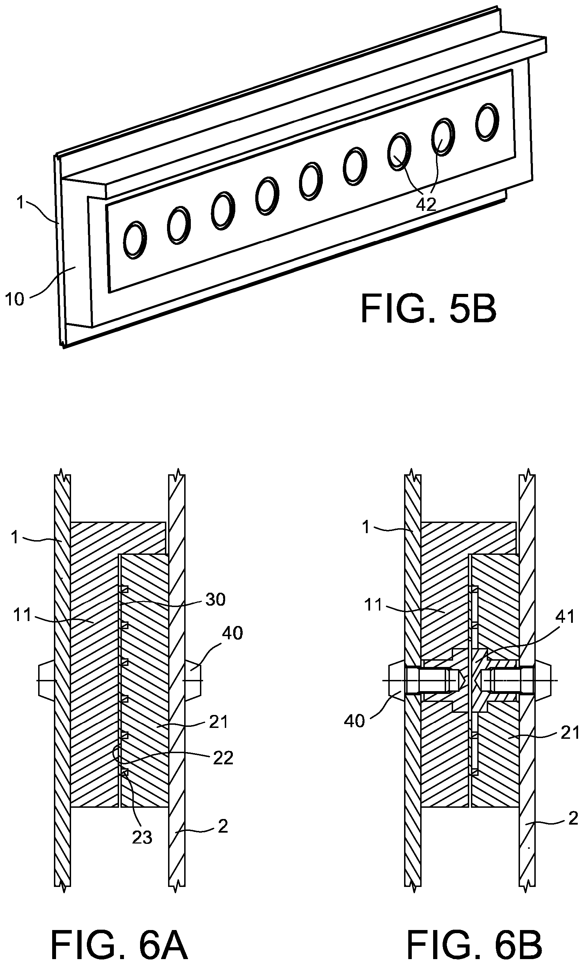

La Figure 5B montre, en perspective, l'ensemble de l'élément 1, de la première pièce de liaison 10, le deuxième élément 2 et la deuxième pièce de liaison 20 ayant été enlevés. On y distingue des trous 42 pratiqués à travers la première pièce de liaison 10, permettant le passage des éléments de boulonnage.

La deuxième réalisation de l'invention est illustrée par les Figures suivantes.

Les Figures 6A et 6B montrent, en coupe, cette deuxième réalisation qui comprend moins d'éléments que la première. On y retrouve les deux éléments 1 et 2, qui enferment leurs deux pièces de liaisons respectives 11 et 21. Les vis 40 et leurs écrous 41 sont également représentés. La différence entre cette réalisation et la première réside dans le fait que la thermite, est placée dans des rainures 23, usinées sur la surface de liaison 22 de la deuxième pièce de liaison. Ainsi, la couche de liaison 30 est en contact direct avec la thermite qui doit la faire fondre.

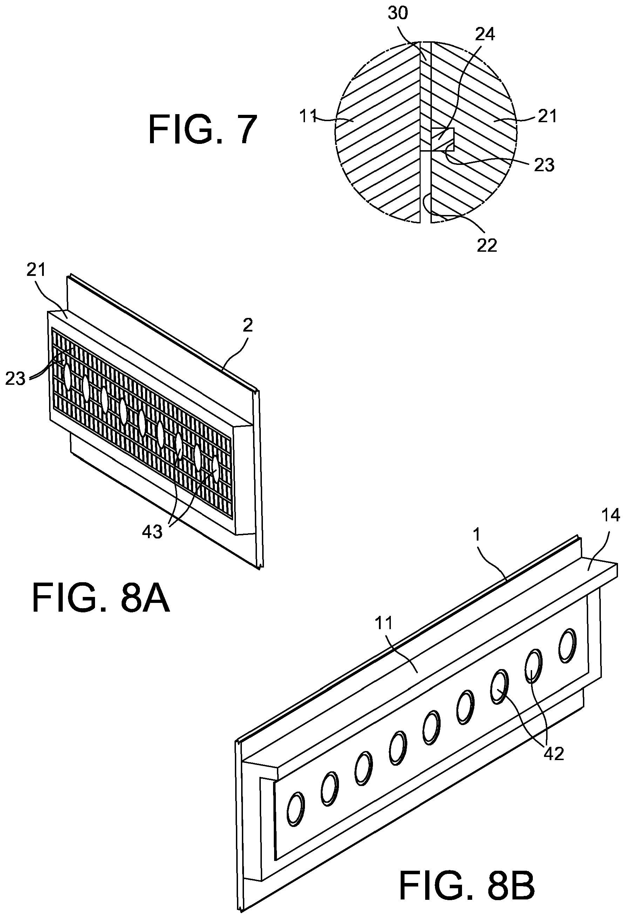

La Figure 7 montre, en coupe, le détail de cette spécificité, c'est-à-dire de la thermite 24, placé dans une rainure 23, pratiquée sur la surface de liaison 22 de la deuxième pièce de liaison 21. La couche de liaison 30, ainsi que la première pièce de liaison 11, sont également représentées. Pour effectuer la séparation des éléments 1 et 2, il faut détruire la couche de liaison 30 placée entre les deux plaques de liaison 10 et 20 ou la thermite 24 placé dans les rainures 23. Des moyens de déclenchement pyrotechnique à distance, non représentés sur ces Figures, sont donc utilisés.

La Figure 5A peut être utilisée pour montrer que l'aspect externe de cette deuxième réalisation est analogue à la première réalisation.

La Figure 8A montre, en perspective, l'élément 2 et la deuxième pièce de liaison 21, sur la surface de liaison 22 de laquelle sont pratiquées les rainures 23. On voit que ces rainures 23 peuvent être usinées selon deux directions perpendiculaires pour permettre de placer suffisamment de thermite destiné à faire fondre la couche de liaison 30. Des trous 43 traversant la deuxième plaque de liaison 21 et l'élément 2 sont également visibles, ils permettent le passage des éléments de boulonnage.

La Figure 8B montre, en perspective, l'autre partie de ce montage, c'est-à-dire l'élément 1 et la deuxième pièce de liaison 11 avec son talon interne 14 et ses trous 42.

Les éléments 1 et 2 sont, dans l'application préférentielle de l'invention, pour le premier élément 1 un étage de lanceur aérospatiale ou aéronautique de rang n, sur l'extrémité duquel est fixé le deuxième élément 2, qui est soit un deuxième étage de lanceur de rang n + 1, de lanceur, soit une charge opérationnelle, par exemple contenant du matériel ou une installation à mettre sur orbite.

Pour réaliser l'immobilisation des deux éléments 1 et 2, ces derniers sont portés à la température de fusion de la brasure ou de la colle utilisées pour cet assemblage. Par exemple, si ces structures à assembler sont réalisées en titane et que la brasure choisie est un alliage d'argent, l'ensemble de la zone à assembler est porté à la température de fusion de l'alliage d'argent, soi environ 960°C. Pour ce faire, on choisit plusieurs méthodes classiques, par exemple le brasage par induction, le brasage par chauffage au four, sous atmosphère neutre, ou le brasage par résistance. Pour l'assemblage concerné par la présente invention, on note que le brasage par induction, ou le brasage par résistance sont plus adaptés pour les grands volumes. Le brasage étant réalisé, les moyens de chauffage sont retirés et la liaison est alors fonctionnelle.

La thermite constituant les moyens de chauffage est de préférence de la thermite gainée. Ce type de matériau, par réaction d'oxydoréduction exothermique, produit des températures de l'ordre de 1 800°C, à savoir entre 1 230°C et 5 770°C pour des nanothermites. On précise que des dispositifs selon l'invention sont placés autour de l'ensemble de la liaison, c'est-à-dire sur la périphérie de l'ensemble du premier élément 1 et du second élément 2, de préférence d'un lanceur aéronautique.

Dans le cas de deux éléments d'un lanceur aérospatial, les premier élément 1 et deuxième élément 2 sont placés intentionnellement sous pression. De ce fait, lors du déclenchement pyrotechnique, ils vont s'éloigner l'un de l'autre, sous l'effet de bouchon de champagne, selon l'axe linéaire de l'ensemble. Dans le cas où il n'y a pas de pression à l'intérieur des deux éléments, ou entre les structures, l'éloignement peut se faire par tout autre moyen connu, tel que des ressorts, des fusées d'éloignement, des moyens pneumatiques ou autres.

Après la désolidarisation du premier élément et du deuxième élément, la structure intérieure du deuxième élément retrouve une surface sans protubérance, ni arrachement.

De plus, l'invention répond à une disposition de l'Article 5 de la Loi relative aux opérations Spatiale (LOS), relative aux opérateurs de lancement de satellites, afin d'assurer la protection de l'environnement de l'espace extra-atmosphérique, notamment en vue de limiter les risques liés aux débris spatiaux.

## Revendications

1. Procédé de liaison et de séparation d'un premier élément (1) et d'un deuxième élément (2), liés l'un à l'autre au moyen d'une liaison locale définie et devant être séparés de façon certaine, la séparation ayant lieu par échauffement rapide et partiel, au niveau ou à l'entour de cette liaison, l'échauffement étant déclenché à distance,
le procédé comprenant les étapes suivantes :
- lier les premier et deuxième éléments (1, 2) par l'intermédiaire de deux plaques de liaison (10, 20), fixées respectivement sur le premier élément (1) et le deuxième élément (2), avec une couche de liaison (30) constituée de brasure placée entre deux surfaces de liaison respectives (12, 22) de ces deux plaques de liaison (10, 20), une couche de thermite (15), amorçable par une liaison électrique de commande, étant placée près de la couche de liaison (30), sur une surface thermique (16) d'une première plaque de liaison (10) parmi les deux plaques de liaison, cette surface thermique (16) étant opposée à la surface de liaison (12) de la première plaque de liaison (10) ; et
- déclencher pyrotechniquement ladite couche de thermite (15) pour provoquer, par son seul échauffement, l'échauffement et la destruction rapide de la couche de liaison (30).

2. Procédé de liaison et de séparation d'un premier élément (1) et d'un deuxième élément (2), liés l'un à l'autre au moyen d'une liaison locale définie et devant être séparés de façon certaine, la séparation ayant lieu par échauffement rapide et partiel, au niveau ou à l'entour de cette liaison, l'échauffement étant déclenché à distance,
le procédé comprenant les étapes suivantes :
- lier les premier et deuxième éléments (1, 2) par l'intermédiaire de deux plaques de liaison (11, 21), fixées respectivement sur le premier élément (1) et le deuxième élément (2), avec une couche de liaison (30) constituée de brasure placée entre deux surfaces de liaison respectives (12, 22) de ces deux plaques de liaison (11, 21), de la thermite (24), amorçable par une liaison électrique de commande, étant placée près de la couche de liaison (30), dans des rainures (23) pratiquées sur la surface de liaison (22) d'une deuxième plaque de liaison (21) parmi les deux plaques de liaison ; et
- déclencher pyrotechniquement ladite thermite (24) pour provoquer, par son seul échauffement, l'échauffement et la destruction rapide de la couche de liaison (30).

3. Dispositif de liaison et de séparation d'un premier élément (1) et d'un deuxième élément (2), liés l'un à l'autre par une liaison locale définie et devant être séparés de façon certaine, la séparation ayant lieu, au niveau de la liaison, par un échauffement pouvant être déclenché à distance,
le dispositif comprenant :
- une couche de liaison (30) pour relier le premier élément (1) au deuxième élément (2), cette couche de liaison (30) constituée de brasure étant placée entre deux surfaces de liaison respectives (12, 22) ;
- une couche de thermite (15), placée près de la couche de liaison (30), sur une surface thermique (16) ; et
- des moyens de déclenchement pyrotechnique à distance de la thermite,
**caractérisé en ce que** la couche de liaison est placée entre les deux surfaces de liaison respectives de deux plaques de liaison (10, 20) configurées pour être respectivement fixées sur le premier élément (1) et le deuxième élément (2) et **en ce que** la couche de thermite (15) est placée sur une surface thermique (16) d'une première plaque de liaison (10) parmi les deux plaques de liaison, cette surface thermique (16) étant opposée à la surface de liaison (12) de la première plaque de liaison (10).

4. Dispositif selon la revendication 3, **caractérisé en ce qu'**une plaque de protection thermique (17), ainsi qu'un capot (18), sont placés entre la première plaque de liaison (10), portant la couche de thermite (15), et le premier élément (1).

5. Dispositif de liaison et de séparation d'un premier élément (1) et d'un deuxième élément (2), liés l'un à l'autre par une liaison locale définie et devant être séparés de façon certaine, la séparation ayant lieu, au niveau de la liaison, par un échauffement pouvant être déclenché à distance,
le dispositif comprenant :
- une couche de liaison (30) pour relier le premier élément (1) au deuxième élément (2), cette couche de liaison (30) constituée de brasure étant placée entre deux surfaces de liaison respectives (12, 22) ;
- de la thermite (24) placée près de la couche de liaison (30) dans des rainures (23) ; et
- des moyens de déclenchement pyrotechnique à distance de la thermite,
**caractérisé en ce que** la couche de liaison est placée entre les deux surfaces de liaison respectives de deux plaques de liaison (11, 21) configurées pour être respectivement fixées sur le premier élément (1) et le deuxième élément (2) et **en ce que** la thermite (24) est placée dans les rainures pratiquées sur la surface de liaison (22) d'une deuxième plaque de liaison (21) parmi les deux plaques de liaison.

6. Dispositif selon l'une quelconque des revendications 3 à 5, **caractérisé en ce que** les plaques de liaison (10, 11, 20, 21) sont configurées pour être fixées à leurs éléments respectifs (1, 2) par boulonnage.

7. Lanceur aéronautique comportant un premier étage porteur et un deuxième étage porté par le premier étage porteur, liés linéairement et devant être séparés linéairement, le lanceur comprenant une pluralité de dispositifs selon l'une des revendications 3 à 6, répartis sur toute la circonférence du lanceur, entre les deux étages, pour solidariser et séparer ces deux étages, le premier élément (1) étant la paroi du premier étage porteur, le deuxième élément (2) étant la paroi du deuxième étage porté.

8. Lanceur selon la revendication 7 dépendant de la revendication 4, **caractérisé en ce que** la première plaque de liaison (10) possède un premier talon (14), s'étendant d'un côté de la première plaque de liaison (10) en prenant appui sur une première extrémité de la deuxième plaque de liaison (20), et deux deuxièmes talons (19) s'étendant latéralement de l'autre côté de la première plaque de liaison (10), pour entourer la plaque de protection thermique (17) et le capot (18).

9. Lanceur selon la revendication 7 dépendant de la revendication 6, **caractérisé en ce qu'**une première plaque de liaison (11) parmi les deux plaques de liaison possède un talon (14) s'étendant latéralement pour prendre appui sur une extrémité de la deuxième plaque de liaison (21).

## Patentansprüche

1. Verfahren zum Verbinden und Trennen eines ersten Elements (1) und eines zweiten Elements (2), die mittels einer definierten bereichsweisen Verbindung miteinander verbunden werden und sicher getrennt werden sollen, wobei die Trennung durch schnelle und partielle Erhitzung an oder um diese Verbindung herum erfolgt, wobei die Erhitzung fernausgelöst wird,
wobei das Verfahren die folgenden Schritte umfasst:
- Verbinden des ersten und zweiten Elements (1, 2) über zwei jeweils an dem ersten Element (1) bzw. dem zweiten Element (2) befestigte Verbindungsplatten (10, 20) mit einer Verbindungsschicht (30) aus Hartlot, die zwischen zwei jeweiligen Verbindungsflächen (12, 22) dieser beiden Verbindungsplatten (10, 20) angeordnet ist, wobei eine Thermit-Schicht (15), die durch eine elektrische Steuerverbindung gezündet werden kann, in der Nähe der Verbindungsschicht (30) an einer thermischen Fläche (16) einer ersten Verbindungsplatte (10) aus den beiden Verbindungsplatten angeordnet ist, wobei diese thermische Fläche (16) der Verbindungsfläche (12) der ersten Verbindungsplatte (10) gegenüberliegt; und
- pyrotechnisches Auslösen der Thermit-Schicht (15), um allein durch ihre Erhitzung die Erhitzung und schnelle Zerstörung der Verbindungsschicht (30) zu bewirken.

2. Verfahren zum Verbinden und Trennen eines ersten Elements (1) und eines zweiten Elements (2), die mittels einer definierten bereichsweisen Verbindung miteinander verbunden werden und sicher getrennt werden sollen, wobei die Trennung durch schnelle und partielle Erhitzung an oder um diese Verbindung herum erfolgt, wobei die Erhitzung ferngesteuert ausgelöst wird,
wobei das Verfahren die folgenden Schritte umfasst:
- Verbinden des ersten und zweiten Elements (1, 2) über zwei jeweils an dem ersten Element (1) bzw. dem zweiten Element (2) befestigte Verbindungsplatten (11, 21) mit einer Verbindungsschicht (30) aus Hartlot, die zwischen zwei jeweiligen Verbindungsflächen (12, 22) dieser beiden Verbindungsplatten (11, 21) angeordnet ist, wobei Thermit (24), das durch eine elektrische Steuerverbindung gezündet werden kann, in der Nähe der Verbindungsschicht (30) in Nuten (23) angeordnet ist, die an der Verbindungsfläche (22) einer zweiten Verbindungsplatte (21) aus den beiden Verbindungsplatten ausgebildet sind; und
- pyrotechnisches Auslösen von Thermit (24), um allein durch dessen Erhitzung die Erhitzung und schnelle Zerstörung der Verbindungsschicht (30) zu bewirken.

3. Vorrichtung zum Verbinden und Trennen eines ersten Elements (1) und eines zweiten Elements (2), die durch eine definierte bereichsweise Verbindung miteinander verbunden werden und sicher getrennt werden sollen, wobei die Trennung an der Verbindung durch Erhitzung erfolgt, die fernausgelöst werden kann,
wobei die Vorrichtung enthält:
- eine Verbindungsschicht (30) zum Verbinden des ersten Elements (1) und des zweiten Elements (2), wobei diese Verbindungsschicht (30) aus Hartlot zwischen zwei jeweiligen Verbindungsflächen (12, 22) angeordnet ist;
- eine Thermit-Schicht (15), die in der Nähe der Verbindungsschicht (30) an einer thermischen Fläche (16) angeordnet ist;
- Mittel zum pyrotechnischen Fernauslösen von Thermit,
**dadurch gekennzeichnet, dass** die Verbindungsschicht zwischen den beiden jeweiligen Verbindungsflächen zweier Verbindungsplatten (10, 20) angeordnet ist, die dazu ausgelegt sind, jeweils an dem ersten Element (1) bzw. dem zweiten Element (2) befestigt zu werden, und dass die Thermit-Schicht (15) an einer thermischen Fläche (16) einer ersten Verbindungsplatte (10) aus den beiden Verbindungsplatten angeordnet ist, wobei diese thermische Fläche (16) der Verbindungsfläche (12) der ersten Verbindungsplatte (10) gegenüberliegt.

4. Vorrichtung nach Anspruch 3,
**dadurch gekennzeichnet, dass** eine Hitzeschutzplatte (17) sowie eine Haube (18) zwischen der ersten Verbindungsplatte (10), die die Thermit-Schicht (15) trägt, und dem ersten Element (1) angeordnet sind.

5. Vorrichtung zum Verbinden und Trennen eines ersten Elements (1) und eines zweiten Elements (2), die durch eine definierte bereichsweise Verbindung miteinander verbunden werden und sicher getrennt werden sollen, wobei die Trennung im Bereich der Verbindung durch Erhitzung erfolgt, die fernausgelöst werden kann,
wobei die Vorrichtung enthält:
- eine Verbindungsschicht (30) zum Verbinden des ersten Elements (1) mit dem zweiten Element (2), wobei diese Verbindungsschicht (30) aus Hartlot zwischen zwei jeweiligen Verbindungsflächen (12, 22) angeordnet ist;
- Thermit (24), das in der Nähe der Verbindungsschicht (30) in Nuten (23) angeordnet ist; und
- Mittel zum pyrotechnischen Fernauslösen von Thermit,
**dadurch gekennzeichnet, dass** die Verbindungsschicht zwischen den beiden jeweiligen Verbindungsflächen zweier Verbindungsplatten (11, 21) angeordnet ist, die dazu ausgelegt sind, jeweils an dem ersten Element (1) bzw. dem zweiten Element (2) befestigt zu werden, und dass das Thermit (24) in den Nuten angeordnet ist, die an der Verbindungsfläche (22) einer zweiten Verbindungsplatte (21) aus den beiden Verbindungsplatten angeordnet ist.

6. Vorrichtung nach einem der Ansprüche 3 bis 5,
**dadurch gekennzeichnet, dass** die Verbindungsplatten (10, 11, 20, 21) dazu ausgelegt sind, durch Verschrauben an ihren jeweiligen Elementen (1) befestigt zu werden.

7. Trägerrakete mit einer ersten Trägerstufe und einer von der ersten Trägerstufe getragenen zweiten Stufe, die linear miteinander verbunden sind und linear getrennt werden sollen, wobei die Trägerrakete eine Vielzahl von Vorrichtungen nach einem der Ansprüche 3 bis 6 umfasst, die über den gesamten Umfang der Trägerrakete zwischen den beiden Stufen verteilt sind, um diese beiden Stufen fest miteinander zu verbinden und zu trennen, wobei das erste Element (1) die Wand der ersten Trägerstufe ist und das zweite Element (2) die Wand der getragenen zweiten Stufe ist.

8. Trägerrakete nach Anspruch 7 in Abhängigkeit von Anspruch 4,
**dadurch gekennzeichnet, dass** die erste Verbindungsplatte (10) einen ersten Absatz (14) aufweist, der sich auf einer Seite der ersten Verbindungsplatte (10) erstreckt, indem er sich an einem ersten Ende der zweiten Verbindungsplatte (20) abstützt, sowie zwei zweite Absätze (19), die sich seitlich auf der anderen Seite der ersten Verbindungsplatte (10) erstrecken, um die Hitzeschutzplatte (17) und die Haube (18) zu umschließen.

9. Trägerrakete nach Anspruch 7 in Abhängigkeit von Anspruch 6,
**dadurch gekennzeichnet, dass** eine erste Verbindungsplatte (11) aus den beiden Verbindungsplatten einen Absatz (14) aufweist, der sich seitlich erstreckt, um sich an einem Ende der zweiten Verbindungsplatte (21) abzustützen.

## Claims

1. Method for connecting and separating a first element (1) and a second element (2), connected to each other by means of a defined local connection and that have to be securely separated, the separation occurring by a quick and partial warming-up, at or near this connection, the warming-up being remotely triggered,
the method comprising the following steps:
- connecting the first and second elements (1, 2) through two connecting plates (10, 20) respectively attached to the first element (1) and the second element (2), with a connecting layer (30) formed of soldering placed between two respective connecting surfaces (12, 22) of these two connecting plates (10, 20), a thermite layer (15), able to be triggered by an electrical control connection, being placed close to the connecting layer (30), on a thermal surface (16) of a first connecting plate (10) among the two connecting plates, this thermal surface (16) being opposite to the connecting surface (12) of the first connecting part (10); and
- pyrotechnically triggering said thermite layer (15) to cause, only by its warming-up, the quick warming-up and destruction of the connecting layer (30).

2. Method for connecting and separating a first element (1) and a second element (2), connected to each other by means of a defined local connection and that have to be securely separated, the separation occurring by a quick and partial warming-up, at or near this connection, the warming-up being remotely triggered,
the method comprising the following steps:
- connecting the first and second elements (1, 2) through two connecting plates (11, 21) respectively attached to the first element (1) and the second element (2), with a connecting layer (30) formed of soldering placed between two respective connecting surfaces (12, 22) of these two connecting plates (11, 21), thermite (24), able to be triggered by an electrical control connection, being placed close to the connecting layer (30), in grooves (23) formed on the connecting surface (22) of a second connecting plate (21) among the two connecting plates; and
- pyrotechnically triggering said thermite (24) to cause, only by its warming-up, the quick warming-up and destruction of the connecting layer (30).

3. Device for connecting and separating a first element (1) and a second element (2), connected to each other by a defined local connection and that have to be securely separated, the separation occurring, at the connection, by a warming-up that can be remotely triggered,
the device comprising:
- a connecting layer (30) for connecting the first element (1) to the second element (2), this connecting layer (30) formed of soldering being placed between two respective connecting surfaces (12, 22);
- a thermite layer (15), placed close to the connecting layer (30), on a thermal surface (16); and
- means for remotely pyrotechnically triggering the thermite,
**characterized in that** the connecting layer is placed between the two respective connecting surfaces of two connecting plates (10, 20) configured to be respectively attached to the first element (1) and the second element (2) and **in that** the thermite layer (15) is placed on a thermal surface (16) of a first connecting plate (10) among the two connecting plates, this thermal surface (16) being opposite to the connecting surface (12) of the first connecting part (10).

4. Device according to claim 3, **characterised in that** a heat protecting plate (17), as well as a cap (18), are placed between the first connecting plate (10), carrying the thermite layer (15), and the first element (1).

5. Device for connecting and separating a first element (1) and a second element (2), connected to each other by a defined local connection and that have to be securely separated, the separation occurring, at the connection, by a warming-up that can be remotely triggered,
the device comprising:
- a connecting layer (30) for connecting the first element (1) to the second element (2), this connecting layer (30) formed of soldering being placed between two respective connecting surfaces (12, 22);
- thermite (24) placed close to the connecting layer (30) in grooves (23); and
- means for remotely pyrotechnically triggering the thermite,
**characterized in that** the connecting layer is placed between the two respective connecting surfaces of two connecting plates (11, 21) configured to be respectively attached to the first element (1) and the second element (2) and **in that** the thermite (24) is placed in the grooves formed on the connecting surface (22) of a second connecting plate (21) among the two connecting plates.

6. Device according to any one of claims 3 to 5, **characterised in that** the connecting plates (10, 11, 20, 21) are configured for being attached to their respective elements (1, 2) by bolting.

7. Aeronautic launcher comprising a first carrier stage and a second stage carried by the first carrier stage, which are linearly connected and have to be linearly separated, the launcher comprising a plurality of devices according to one of claims 3 to 6, distributed over the entire circumference of the launcher, between the two stages, to secure and separate these two stages, the first element (1) being the wall of the first carrier stage, the second element (2) being the wall of the second carried stage.

8. Launcher according to claim 7 when dependent on claim 4, **characterised in that** the first connecting plate (10) has a first land (14), extending on one side of the first connecting plate (10) by pressing against a first end of the second connecting plate (20), and two second lands (19) laterally extending on the other side of the first connecting plate (10), to surround the heat protecting plate (17) and the cap (18).

9. Launcher according to claim 7 when dependent on claim 6, **characterised in that** a first connecting plate (11) among the two connecting plates has a land (14) laterally extending to press against one end of the second connecting plate (21).
